# EUROPÄISCHE PATENTSCHRIFT

(11) **EP 1 377 503 B1**
(45) Veröffentlichungstag und Bekanntmachung des Hinweises auf die Patenterteilung: **23.02.2005**
(21) Anmeldenummer: 02724233.8
(22) Anmeldetag: 14.03.2002
(51) Int. Cl.: B64D 15/12, H05B 6/80, B64D 15/06

(54) **MIKROWELLENTECHNISCHE EINRICHTUNG UND VERFAHREN ZUR EISFREIHALTUNG VON HOHLKÖRPER-STRUKTUREN**
MICROWAVE DEVICE FOR DE-ICING OR KEEPING THE SURFACE OF DIMENSIONALLY STABLE HOLLOW BODY STRUCTURES FREE FROM ICE AND METHOD FOR THE OPERATION OF SAID DEVICE
DISPOSITIF A TECHNIQUE MICRO-ONDES POUR L'ANTI-GIVRAGE ET LE DEGIVRAGE A LA SURFACE DE STRUCTURES EN CORPS CREUX INDEFORMABLES ET PROCEDE POUR L'EXPLOITATION DE CE DISPOSITIF

(30) Priorität: 11.04.2001 DE 10118121
(43) Veröffentlichungstag der Anmeldung: 07.01.2004
(73) Patentinhaber: Forschungszentrum Karlsruhe GmbH, 76133 Karlsruhe (DE); Deutsches Zentrum für Luft- und Raumfahrt e.V., 51170 Köln (DE)
(72) Erfinder: FEHER, Lambert, 76297 Stutensee (DE); PABSCH, Arno, 38110 Braunschweig (DE)
(86) Internationale Anmeldenummer: PCT/EP2002/002842
(87) Internationale Veröffentlichungsnummer: WO 2002/083498

(56) Entgegenhaltungen:
- WO-A-98/01340
- DE-A- 19 750 198
- US-A- 5 615 849

## Beschreibung

Die Erfindung betrifft eine mikrowellendichte, formstabile Hohlkörper-Struktur und Verfahren zur Eisfreihaltung und Enteisung solcher Hohlkörper-Strukturen.

Hohlkörper-Strukturen, die meteorologischen Einflüssen mit feuchtkalter Atmosphäre ausgesetzt sind, neigen an exponierten, insbesondere angeströmten Oberflächenbereichen zur Vereisung. Der Ansatz von Eis an solchen Strukturen beeinträchtigt die vorgesehene Umströmung der Luft und die Art der Strömung empfindlich, was insbesondere in der Luftfahrt zu aerodynamisch problematischen Situationen und sogar aerodynamisch unkontrollierbarem Verhalten führen kann.

Die Anstrengungen, die vereisungsgefährdete Bereiche an exponierten Strukturen eisfrei zu halten, sind vielfältig und reichen vom Besprühen oder Bespülen solcher Flächen mit einer die Eisbildung hemmenden Flüssigkeit, über das Anströmen der Innenflächen dieser Strukturen mit Warmluft bis zum ohmschen Beheizen solcher Bereiche über in die Wand eingelegte Metallnetze.

Die Forderung ist: Bedingungen zur Eisbildung müssen neutralisiert werden. Das gelingt beim Enteisen mittels Flüssigkeit nur vorübergehend, insbesondere beim Verwenden von Enteisungsflüssigkeit. Der anhaftende Film reißt schon bei starker Umströmung ab. Regen etwa spült ein solches Mittel je nach Stärke früher oder später schon ab.

Im Leichtkörperbau setzt sich mehr und mehr der Aufbau von Hohlkörper- oder Schalenstrukturen aus Prepreg, CFK- und GFK-Kompositteile allgemein: Faserverbundwerkstoffe mit für den Verwendungszweck Eigenschaft-verbessernden Additiven durch. Allerdings besitzen solche Verbundwerkstoffe, wenn auch sehr formstabil/-steif und damit mit hoher mechanischer Festigkeit/und Zähigkeit versehen, bei einer im Vergleich zu Metall sehr schlechten, anisotropen thermischen Leitfähigkeit mit der Gefahr der Bildung von Wärmestaus und Überhitzung und damit der Gefahr der lokalen Delamination beim Anblasen mit heißer Luft, bzw. die Flugsicherheit betreffende starke Beschränkung der Möglichkeit, ausreichende Flächenleistungsdichten an der strömungszugewandten, potentiell eisbehafteten Fläche einbringen zu können.

Ein Enteisungssystem zur Verhinderung eines Eisansatzes oder zur Enteisung an vereisungsgefährdeten Zonen eines Flugzeugs mittels Mikrowellen wird in der DE 197 50 198 A1 beschrieben. Vereisungsgefährdete Zonen am Flugzeug bestehen dort aus dielektrischen, avionisch einsetzbaren Strukturen und Verbundwerkstoffen, die für elektromagnetische Wellen in einem Frequenzbereich oberhalb 20 GHz dielektrisch hochpermeabel sind. Hierzu ist im Flugzeug mindestens eine Mikrowellenquelle untergebracht, die gepulst oder kontinuierlich in einem Frequenzbereich außerhalb avionisch genutzter Frequenzen abstrahlt. Von jeder Mikrowellenquelle gehen autark schaltbare Wellenleitersysteme aus und führen zu unterschiedlich vereisungsgefährdeten Zonen, wo über an die Struktur dieser Zonen angepaßte Mikrowellenauskoppelvorrichtungen, die entsprechend ihrer Bedeutung für den Auftrieb des Flugzeugs unter Einbeziehung der gegenwärtigen meteorologischen Situation Mikrowellenenergie bedarfs- und leistungsgerecht auskoppeln, und der besonders auftriebsrelevante Innen und Mittelflügel durch ein eigenes autarkes Wellenleitersystem zur Verhinderung der Kondensation von Wassertröpfchen schon frühzeitig oder ständig mit niedriger Leistung bestrahlt wird. Jedes Wellenleitersystem besteht aus hochmodigen, flexiblen Wellenleitern mit abschnittsweise leistungskonstanter, flächenhomogener, regelbarer Hochfrequenz-Auskopplung, wodurch im Strukturverbundwerkstoff und im gegebenenfalls an der Grenzfläche angesetzten Eisvolumen eine instantane und gleichmäßige Erwärmung eintritt. Die Mikrowellenquellen sind über Redundanzwellenleiter miteinander verbunden, die zu und abschaltbar sind, um den Ausfall mindestens einer Mikrowellenquelle durch die noch funktionierende/funktionierenden zu überbrücken.

In der DE 100 16 261 wird ein kompaktes mikrowellentechnisches System zum Enteisen und/oder Vorbeugen einer Vereisung der äußeren Oberfläche von meteorologischen Einflüssen ausgesetzten Hohlraum- oder Schalenstrukturen beschrieben. Die Hohlraum-/Schalenstrukturen bestehen aus mit thermoplastischen oder duroplastischen Kunststoffsystemen ausgehärteten Verbundwerkstoffen mit dielektrischen Eigenschaften. Das System hat mindestens eine Mikrowellenquelle, die in ihrer Leistung steuerbar, gepulst oder kontinuierlich betrieben, über ein angeflanschtes Hohlleiter- und Auskoppelsystem im Frequenzbereich von 900 MHz bis 20 GHz vorgegeben monochromatisch abstrahlt. Zumindest die vereisungsgefährdete Front der jeweiligen Struktur hat einen laminierten Aufbau, der aus einem Formkörper als Trägerstruktur aus dielektrischem Verbundmaterial einer der Beanspruchung angepassten Schub-, Druck und Biegefestigkeit besteht. Die Struktur ist äußerlich mit einer metallischen Haut als Blitzschutz überzogen. In Verbindung mit anderen anstoßenden oder unmittelbar angrenzenden Baustrukturen mit metallischer Oberfläche ist sie elektrisch leitend verbunden, so dass darüber hinaus ein metallisch umschlossener Hohlraum besteht.

Im Hohlraum oder in Kammern eines jeden solchen Formkörpers ist mindestens ein für sich alleine betriebenes Mikrowellensystem eingebaut, das aus einer Mikrowellenquelle mit Netzteil und Auskoppeleinrichtung aus Hohlleiter und Auskoppelstruktur besteht. Die Auskoppelstruktur ist im Innern des Formkörpers entlang zur äußeren Anströmfront derart aufgestellt, dass die ausgekoppelte Mikrowelle innen entlang dieser mit einer Wellenfront oder nahezu mit einer Wellenfront auf die freie innere Oberfläche des Verbundmaterials auftrifft. Sie penetriert dasselbe und erwärmt den dortigen Frontbereich des Verbundmaterialvolumens durch die Mikrowelleneinwirkung über Volumenheizung. Die Erwärmung erfolgt derart, dass das Verbundmaterial einerseits unter der Einwirkung der Mikrowelle an jeder Stelle weit unterhalb der Delaminationstemperatur von etwa 130°C des Verbundmaterials bleibt und andererseits an der Schnittfläche Formkörper/Metallhaut eine vorgegebene Flächenleistungsdichte bis über 60 kW/m² bei anhaftendem Klareis gefahrlos bestehen kann. Die Metallhaut wird dadurch auf einer vorgebbaren, den meteorologischen Anforderungen entsprechenden Temperatur vom Eisschmelzpunkt 0°C bis +70°C und Abtaugeschwindigkeit gehalten, bei der es auf der luftangeströmten Front bei eingeschaltetem Mikrowellensystem mit Sicherheit zu keiner Eisbildung kommt oder angesetztes Eis an der Anströmfront an der Berührfläche mit Einschalten des Mikrowellensystem an-/abtaut.

Der Erfindung liegt die Aufgabe zugrunde, eine baulich einfache, kompakte, dezentrale Enteisungseinrichtung für Hohl- oder Schalenkörperstrukturen, die meteorologischen Einflüssen mit feuchtkalter Atmosphäre ausgesetzt sind und deshalb an exponierten, insbesondere angeströmten Oberflächenbereichen zur Vereisung neigen, bereitzustellen.

Die Aufgabe wird durch bei Konstruktionen verwendeten mikrowellendichten, formstabilen Hohlkörper-Struktur nach dem Bauprinzip gemäß dem Oberbegriff des Anspruchs 1 und seinen kennzeichnenden Merkmalen gelöst.

Der an der Atmosphäre exponierte Bereich der Hohlkörper-Struktur ist abschnittsweise oder teilweise entlang einer von der Luftströmung angeströmten Kante zu enteisen bzw. eisfrei zu halten. Dieser eisfrei zu haltende oder zu enteisende Bereich ist entlang der Kante in aneinandergereihte Oberflächensegmente gegliedert. Jedes dieser Segmente hat zwei von der Kante weglaufende Grenzen, die jeweils mit der Stoßlinie an der Hohlkörper-Wand einer im Hohlkörper dort verankerten Rippe zusammenfällt. Die Grenzlinie des jeweiligen Oberflächensegments schließt sich vollends entlang zweier Linien, die mit den beiden Stoßlinien auf der Hohlkörper-Wand eines in der Hohlkörper-Struktur verankerten Holms zusammenfällt.

Durch die Oberflächensegmente, Rippen und den Holm im Innern einer solchen Hohlkörper-Struktur entlang der luftangeströmten Kante bestehen so Kammern, die jeweils zu ihrer Umgebung hin mikrowellendicht abgeschottet sind, weil sie auf ihrer zur Atmosphäre exponierten Wand eine metallische Haut oder ein mikrowellendichtes Metallnetz haben und die übrigen Wände, die beiden Rippenabschnitte und der zugehörige Holmabschnitt, genauso einen Überzug haben oder aus Hohlraum-Struktur-geeignetem Metall, wie Edelstahl oder Hartaluminium, sind.

Im Innern jeder Kammer ist an der von darin aus gesehenen Innenseite der Holmwand parallel zur Kante die Hohlleiter-Auskoppelstruktur befestigt. Sie ist durch die Wand des Holms hindurch an ihre zugeordnete Mikrowellenquelle angeflanscht. Die Geometrie der Kammern und die Frequenz der Mikrowelle, je nach dem zwischen 900 MHz und 25 GHz, ist derart, dass in jeder Kammer bei zugehörig eingeschalteter Mikrowellenquelle ein elektromagnetisches Feld mit Übermodierung, also dem Auftreten vieler möglicher Moden, angeregt wird. Damit dringt die Mikrowelle entsprechend der Übermodierung mit gleicher oder mit nahezu gleicher Leistungsflächendichte in die Wand aus Faserverbundwerkstoff, CFK oder GFK, des Oberflächensegments ein und erwärmt diese entsprechend der elektrischen Eigenschaften, also der elektrischen Leitfähigkeit. Durch die das jeweilige Oberflächensegment außen abschirmende Metallhaut kann die Mikrowelle nicht ins Freie treten. Die gesamte Kammer ist nach außen hin mikrowellendicht.

Im eisfrei zu haltenden Bereich entlang der luftangeströmten Kante und entlang der davon auf der äußeren Hohlkörper-Oberfläche abgehenden Grenze des Oberflächensegments bis mindestens zum Holm sind in der Wand der Hohlkörper-Struktur metallische Doppelleitungen aus elektrisch gut leitendem Material eingelassen. Diese Liniendoppelleitungen sind über Schläuche vollends mit den Mikrowellenquellen bzw. mit deren jeweiligem Kühlkanal so zu einem Kühlmittelkreislauf geschlossen, dass in den Doppelleitungen stets eine Kühlmittelgegenströmung besteht und die Mikrowellenquellen hintereinander durchströmt werden. Damit besteht bei stationärem Betrieb der Mikrowellenquellen bei entsprechender Auslegung entlang der Doppelleitungen eine gleiche Temperatur, die alleine von der Abwärme der Mikrowellen herrührt. Jeder Kühlmittelkreislauf kann zur Sicherheit noch an eine weitere Wärmequelle angeschlossen werden, das wäre aber eine übliche Maßnahme, die ergriffen werden würde, falls Redundanz für ein solches System eingerichtet werden müsste.

Bestandteil der Erfindung ist weiter das Verfahren gemäß den kennzeichnenden Merkmalen des Anspruchs 8 zum Eisfreihalten und Enteisen eines vorgegebenen Oberflächenbereichs an solchen Strukturen gemäß einer der Ansprüche 1 bis 7.
Ein Vorgang ist das kontinuierliche Eisfreihalten der linienförmigen Struktur in dem Bereich auf der nach außen gerichteten, exponierten Oberfläche der Hohlraum-Struktur durch die in der Wand verlegten Doppelleitungen. Durch den derartigen Aufbau des Kühlmittelkreislaufs in einem solchen Bereich erhält man im Doppelleitungsbereich eine Kühlmittelgegenströmung, d.h. die Strömung in beiden Leitungen ist dort entgegengesetzt, und eine strömungstechnische Hintereinanderschaltung der Wärmequellen, der Mikrowellenquellen aus dem Bereich, durch die Kühlmittel gepumpt wird.

Die Mikrowellenquellen eines Bereichs werden zyklisch betrieben, d.h. mindestens eine Mikrowellenquelle ist für eine einstellbare Zeit eingeschaltet, die übrigen dann nicht und umgekehrt. Dabei ist zwischen zwei eingeschalteten Mikrowellenquellen immer eine ausgeschaltete. Entsprechend der Anzahl Mikrowellenquellen ergibt sich die Zykluszeit wegen der notwendigen Ein- und Auszeit jeder Mikrowellenquelle.

Diese einzelne Zykluszeit eines Bereichs kann mit der von andern Bereichen zu einer übergeordneten Zykluszeit verkoppelt werden, indem die einzelnen Zykluszeiten addiert werden, das wäre ein zeitlich sequentieller Betrieb, oder indem die Bereiche unabhängig voneinander betrieben werden, das wäre zeitlich eine Art simultaner Betrieb. Schließlich ist auch ein gruppenweiser simultaner Betrieb einrichtbar. Das aber ist eine Steuerangelegenheit und orientiert sich am Wärmebedarf.

Während einer einzelnen Zykluszeit ist also immer mindestens eine Mikrowellenquelle aus einem solchen Bereich eingeschaltet und erzeugt Abwärme für die Linienerwärmung. Die nahe Umgebung der Doppelleitungen ist während einer Zykluszeit ständig über den in Grenzen variierbaren Wirkungsgrad der Mikrowellenquellen einstellbar warm, und aufgrund der Dimension der mikrowellentechnischen Enteisungseinrichtung so warm, dass die Linienstruktur eisfrei bleibt und eine eventuell vorhandene Eisschicht auf einem Oberflächensegment aus diesem Bereich der Hohlkörper-Struktur während der zugehörigen eingeschalteten Mikrowellenquelle in ihrer Grenzschicht zum Hohlkörper angetaut und bei einem hinreichend starken Luftstrom schon frühzeitig von der Oberfläche abgerissen oder eben weiter aufgetaut wird. Die Zwischenlinienbereiche können also durchaus kurzzeitig Eis ansetzen. Daher sind die stets eisfreien Linienbereiche eines solchen Bereichs auch derart dimensioniert, dass die Flächen dazwischen immer notwendig schnell und sicher mittels Mikrowelle eisfrei gemacht werden können.

Während der Zykluszeit für einen Bereich können die Mikrowellenquellen während ihrer jeweiligen Einschaltzeit im Dauerstrich oder bei geringerem Wärmebedarf entsprechend pulsbreitengeregelt betrieben werden. Damit ist auf technisch einfache und aus anderen technischen Bereichen bekannte Weise stets ein dem Wärmebedarf angemessener Betrieb einstellbar, der mit Hilfe von Temperatur- und Vereisungssensoren und Datenverarbeitungseinrichtungen geregelt/adaptiv ablaufen kann.

In den Unteransprüchen sind spezifische und weitere nützliche Merkmale beschrieben.
Die hohlleiterartige Auskoppelstruktur über die Länge der Kammer hat runden Querschnitt (Anspruch 2). In Anspruch 3 ist der rechteckige Querschnitt derselben beschrieben, mit dem die Übermodiertheit, d. h. das Auftreten vieler möglicher Moden, beginnend mit dem Grundmode, in der Kammer angeregt wird.

Als Mikrowellenquellen kommen die in Anspruch 4 aufgeführten Quellen, wie das Magnetron, das Klystron, der Rückwärtswellen-Oszillator (BWO), oder der Verlängerte-Wechselwirkungs-Oszillator, vom Englischen Extended Interaction Oscillator, EIO, sogar auch das Gyrotron und schließlich noch Klystroden, in Frage. Die Auswahl daraus bestimmen die technischen Anforderungen und der Preis, den eine solche Enteisungseinrichtung annehmen darf. Häufig ist auch das Gewicht der Mikrowellenquelle ein nicht zu übersehender Faktor.

An dieser Stelle wird auf eine in der Mikrowellentechnik gängige Schutzeinrichtung hingewiesen, der Zirkulator. Mit ihm zwischen der Quellenauskopplung und der Auskopplung ins Freie oder in einen Resonator werden rücklaufende Wellen in die Quelle unterdrückt und damit eine Zerstörung derselben vermieden. Dieser Aufwand ist insbesondere bei nicht gut abgestimmten Einrichtungen nötig und bedeutet einen zusätzlichen technischen und damit monetären Aufwand, eventuell auch noch ein Gewichtsproblem. Diese bekannte Maßnahme wird hier im Schutzumfang nicht erwähnt, da die erfindungsgemäße Einrichtung wohl abgestimmt, nämlich impedanzangepasst, aufgebaut sein soll und damit eine solche mikrowellentechnische Schutzkomponente als Geld- und Gewichtsfaktor entfallen kann.

Um die Wärme entlang der Doppelleitungen widerstandsarm in die Wand der Hohlkörper-Struktur einbringen zu können, sind die Rohrleitungen aus einem die Wärme gut leitenden Material, wie Kupfer oder Messing oder noch Edelstahl. Der Querschnitt dieser Leitungen kann rund oder polygonal sein (Anspruch 5). Die Auswahl wird sich am Einbau und der Herstellung der Hohlkörperstruktur orientieren. Ein technisch naheliegender Querschnitt ist der runde, aber auch ein polygonaler, wie der dreieckige, viereckige oder sechseckige, ist üblich.

Die Auslegung der mikrowellentechnischen Einrichtung geht dahin, dass für ein rasches flächiges Antauen einer Eisschicht genügend Mikrowellenleistung zu Verfügung steht. Bei einem Wirkungsgrad zwischen 0,4 und 0,8 im besten Fall produziert die Quelle auf jeden Falle Wärme, die hier von dem in der Kühlschlange der Quelle vorbeiströmenden Kühlmittel aufgenommen und zu dem linienförmigen Nutzort transportiert wird. Ein Kühlmittelkreislauf besteht also mindestens aus den Doppelleitungen und damit verbundenen Mikrowellenquellen eines eisfrei zu haltenden und zu enteisenden Bereichs (Anspruch 6).

Die Abwärme der Mikrowellenquellen wird so gezielt genutzt und nicht ungenutzt an die Umgebung abgegeben. Falls der Kühlmittelkreislauf nicht alleine durch den Temperaturgradienten im Kreislauf in Bewegung kommt, ist zumindest für den Start eine aktiv betriebene Kühlmittelpumpe im Kreislauf eingebaut (Anspruch 7). Ist er in Gang gekommen und hinreichend stark, kann die Pumpe weiter passiv mit laufen (Anspruch 9).

Bei Redundanzforderungen ist der Kühlmittelkreislauf mit den in Reihe zueinander geschalteten Wärme-/Mikrowellen-Quellen an eine andere Wärmequelle über Ventile angeschlossen. Das aber ist eine Maßnahme, die technisch bekannt ist und bei Bedarf ergriffen wird.

Die Mikrowellenleistung tritt dämpfungsarm an der Auskoppeleinrichtung aus und erwärmt die zur Atmosphäre hin exponierte Schalenstruktur, die als dissipativer Resonator sehr niedriger Güte wirkt, abschnittsweise flächig gleichmäßig mit einem vorgegebenen zeitlichen Zyklus und kontinuierlich entlang einem vorgegeben Linienbereich mit der Abwärme der im Bereich eingesetzten Mikrowellenquellen. Die mikrowellentechnische Enteisungseinrichtung ist einfach vor Ort in solche Hohlkörper-Strukturen einzubauen, so dass der mikrowellentechnische Bauaufwand auf die Mikrowellenquelle, die Auskoppelstruktur und allenfalls ein kurzes Verbindungsstück von der Quelle bis zur Auskoppelstruktur beschränkt bleibt. Das Netzteil für Gruppen von Mikrowellenquellen sitzt zentral. Die Gruppen sind für jeweils einen eisfrei zu haltenden und zu enteisenden Bereich. Von ihm gehen nur noch Hochspannungsversorgungsleitungen zu den Mikrowellenquellen.

Ebenso hat ein Kühlmittelkreislauf mindestens eine Gruppe strömungstechnisch hintereinandergeschalteter Mikrowellenquellen besser deren jeweilige Kühlschlange als Wärmequellen. Bei mehreren Gruppen wird sicher der Kühlkreislauf von einer zentral sitzenden Pumpe mit getrieben.

Solche Hohlkörper-Strukturen können die eisfrei zu haltenden Einrichtungen/Aufbauten eines Schiffes oder eines Zuges oder eines Straßenverkehrsmittel oder die Rotorblätter einer Windkraftanlage oder sonstige, mit allen meteorologischen Bedingungen fertig zu werdende Strukturen sein.

Die mikrowellentechnische Enteisungseinrichtung ist in vielen technischen Geräten, die in irgendeiner Weise der Atmosphäre ausgesetzt sind, einsetzbar. Neben dem Einsatz zu Lande und auf dem Wasser ist ihre Bedeutung in der Luftfahrt für die Flugsicherheit hervorzuheben.

Am Beispiel des Einbaus der mikrowellentechnischen Einrichtung in die Hohlkörper-Struktur des Höhen- und Seitenleitwerks eines Flugzeugs wird das im folgenden anhand der Zeichnung mit den Figuren 1 bis 4 näher erläutert.

Es zeigt:
Figur 1 das Höhen- und Seitenleitwerk in der Perspektive mit angedeutetem Einbau der mikrowellentechnischen Einrichtung im Höhenleitwerk,
Figur 2 das Höhenleitwerk mit der eingebauten mikrowellentechnischen Einrichtung,
Figur 3 die eisfrei zu haltenden Bereichen am Höhen und Seitenleitwerk,
Figur 4 die strömungstechnische Verschaltung.

Als Mikrowellenquellen kommen Quellen mit genügender Mikrowellenleistung in Frage, die über die Auskoppelstruktur in der Kammer ein derart viel- oder übermodiges elektromagnetisches Feld anregen können, dass durch die in die Wand des Oberflächensegments eindringende elektromagnetische Welle eine qualitativ derart flächengleiche/-homogene Erwärmung erfolgt, die bei allen zu erwartenden Wetterbedingungen und Temperaturen die Grenzschicht zwischen den Oberflächensegmenten und der Eisschicht taut. Aus diesen Vorgaben, der elektrischen Eigenschaft - Leitwert - der Hohlkörper-Wand und der notwendigen Vielmodigkeit in der jeweiligen Kammer wird die abzugebende Mikrowellenleistung bestimmt und die Quelle daraufhin ausgesucht. Da hier eine reichliche Auswahl getroffen werden kann, sei an dieser Stelle der Frequenzbereich von etwa 900 MHz bis etwa 25 GHz angeführt, in dem die ausgewählte Quelle arbeiten muß. An Hand des Wirkungsgrades solcher Quellen, der üblicherweise je nach dem zwischen 0,35 und 0,8 liegt, liegt dann auch die verfügbare Abwärme pro Mikrowellenquelle fest. Die Wand des Höhen- und Seitenleitwerks ist zumindest in den zu enteisenden Bereichen aus einem Faserverbundstoff. In der Luftfahrttechnik werden Kohlefaserverbundwerkstoffe, CFK, dazu verwendet. Diese haben eine gewisse elektrische Leitfähigkeit, dementsprechend koppelt die eindringende Mikrowelle an. Bei andern Faserverbundwerkstoffen kann dies nötigenfalls durch entsprechende Additivbeigabe bei der Halbzeugherstellung eingestellt werden.

Gerade in der Luftfahrttechnik gibt es kräftige Temperaturgradienten zwischen der angeströmten Oberfläche und Gerät im Innern der Hohlkörper-Strukturen. Die Kühleinrichtung der Wärmequelle wirkt ähnlich wie die Einrichtung zur Warmwassererzeugung in einer Kaffeemaschine: das kalte flüssige Medium wird erwärmt und nach vorwärts getrieben. Ist die Erwärmung hinreichend leistungskräftig, dann kommt bei nicht zu hoher Reibung ein naturgetriebener Kreislauf zustande.

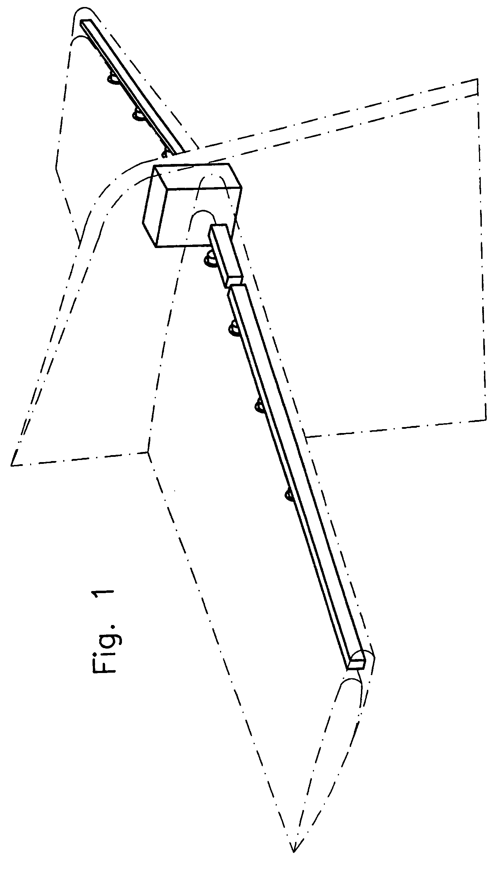

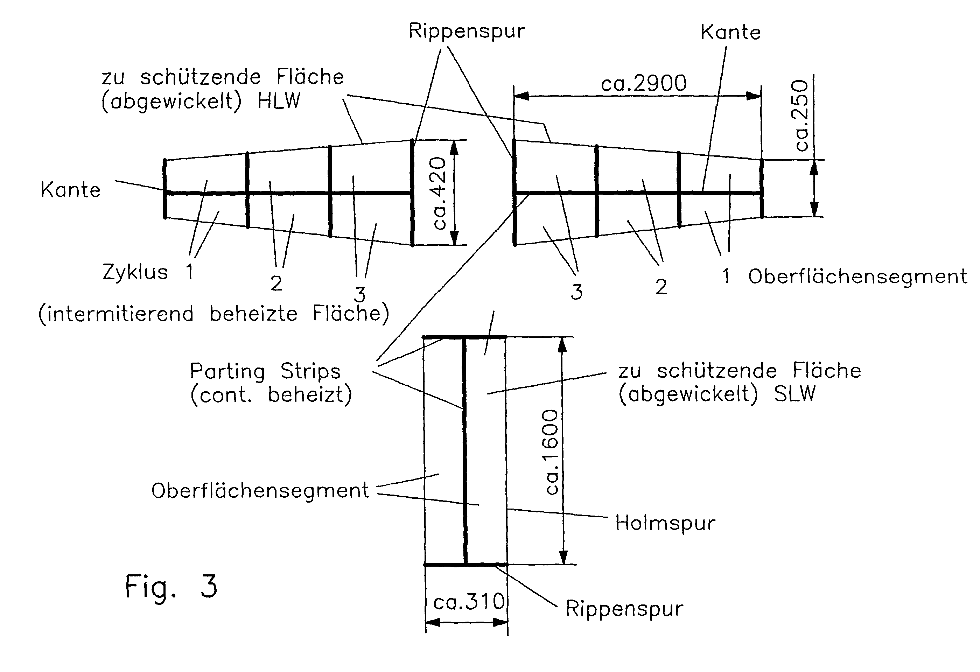

Figur 1 zeigt das Höhenleitwerk und die Kreuzung mit dem Seitenleitwerk. Höhenleitwerk ist die Struktur der mikrowellentechnischen Einrichtung angedeutet, nicht aber im Seitenleitwerk, obwohl, dort auch vorgesehen, wie später aus Figur 3 hervorgeht. Es sind hier also die zwei Bereiche am Höhenleitwerk, die bezüglich des Seitenleitwerks spiegelbildlich zueinander angeordnet sind, hervorgehoben. Jeder Bereich ist in vier Oberflächenbereiche unterteilt. Das deuten die vier aneinander gereihten rohrförmigen Auskoppelstrukturen an, die an ihrem Anfang vom Seitenleitwerk aus gesehen jeweils die zugeordnete Mikrowellenquelle angeflanscht haben. Die eingesetzte Mikrowellenquelle ist hier beispielweise, wie zu Figur 3 beschrieben wird, ein Magnetron, dessen abgegebene Mikrowellenleistung von dem Wärmebedarf, besser der Wärmebedarfsleistung der Wand des zugeordneten Oberflächensegments zur ausreichend raschen Erwärmung der dortigen Metallhaut benötigt wird. Die Abwärme des Magnetrons ermittelt sich aus seinem Wirkungsgrad, der je nach dem zwischen etwa 0,4 und 0,8 liegt. Das die Mikrowellen/Magnetrons versorgende Netzteil ist dementsprechend mindestens für den leistungsstärksten Zyklus dimensioniert.

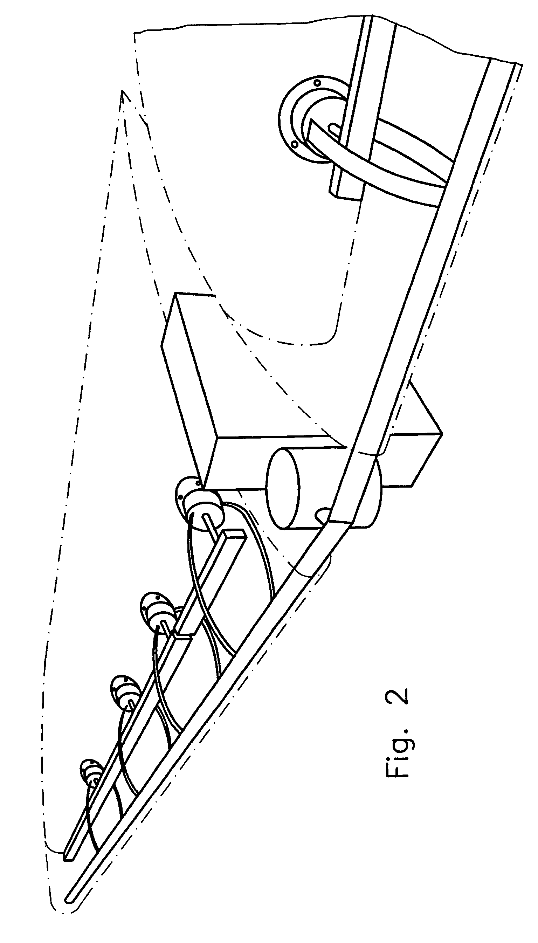

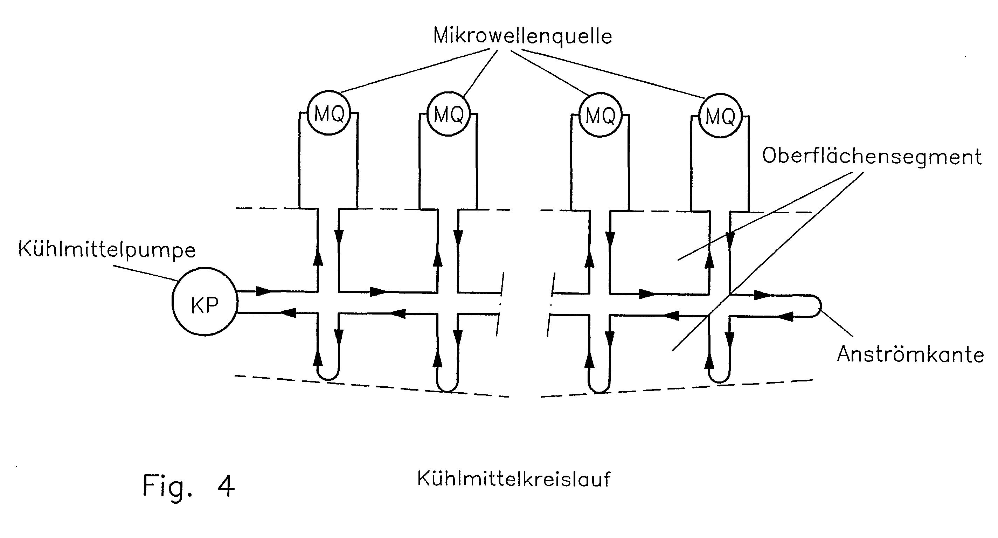

Figur 2 zeigt die Situation an einer Flügelhälfte des Höhenleitwerks deutlicher. Das Seitenleitwerk ist nicht mehr angedeutet, es ist entfernt und zeigt zwischen den beiden Flügeln das Netzteil für die Versorgung der beiden Bereiche im Höhenleitwerk und des hier nicht angedeuteten Bereiches im Seitenleitwerk (siehe Figur 3). Vier hohleiterförmige Auskoppeleinrichtungen sind, hintereinander entlang der Anströmkante des Flügels, in vorgegebenem Abstand zu dieser und der dortigen Flügelwand an dem dort verlaufenden Holm angebaut. Die dicken Doppellinien deuten den Verlauf der Doppelleitungen in der Flügelwand an und zeigen gleichzeitig mit ihren beidseitigen Abzweigungen von der Anströmkante nach hinten die flächengleiche Oberflächensegmente des zu enteisenden Bereichs an. Die Umgebung entlang der Linien ist derartig durch den Kühlkreislauf erwärmt, dass sie ständig eisfrei ist. Wie die Doppelleitungsabzweige von der Anströmkante weg, so verlaufen auch die Rippen im Flügel nach hinten und bilden zusammen mit der Holmteilwand und der Flügelsegmentwand die jeweilige Kammer mit ihrer Auskoppeleinrichtung. An der Stoßlinie des Holms mit der Flügeloberfläche tauchen die fünf Doppelleitungen beidseitig ins Flügelinnere ein und koppeln über Schläuche an der Kühlschnecke der jeweiligen Mikrowellenquelle, und zwar so, dass die Wärmequellen im Kühlkreislauf hintereinander liegen und die Kühlmittelströmung in den Doppelleitungszweigen und entlang der Anströmkante entgegengesetzt sind. Ein Leitungsprinzip ist in Figur 4 deutlich dargestellt.

In Figur 3 ist die Situation dreier eisfreier Linienbereiche und der zugehörigen, eisfrei zu machenden, flächengleichen Oberflächensegmente am Höhen- und Seitenleitwerk schematisch dargestellt. Die Situation ist in die Ebene geklappt. Die beiden Höhenleitwerksbereiche liegen spiegelbildlich zueinander und sind jeweils, im Gegensatz zu Figuren 1 und 2, in nur drei flächengleiche Oberflächensegmente 1, 2 und 3 durch die abgehenden Doppelleitungszweige aufgeteilt. Das senkrecht darunter liegende einfache Oberflächensegment 4 ist das des Seitenleitwerks.

Die jeweils begrenzenden beiden dünnen Linien der Bereiche deutet die Spur des zum Bereich gehörenden Holms an. Die dick ausgezogenen Linien zeigen die Unterteilung und deuten damit die Verlegung der Rohre des jeweiligen Kühlkreislaufes. Im Höhen- und Seitenleitwerk läuft die jeweils gekreuzte dicke Linie entlang der Anströmkante, im Seitenleitwerk wird diese oben und unten dadurch begrenzt. Die Maße sind hier beispielhaft als Anhalt für ein Passagierflugzeug kleinerer Bauart vorgesehen.

Neben der kontinuierlichen Erwärmung der Struktur entlag der dicken Linien über die in der Flügelwand verlegten Rohre der Kühlkreislaufeinrichtung wird hier eine zyklische Betriebsweise derart gewählt, dass die beiden Bereiche 1 mit ihren beidseitig zur Anströmkante liegenden Bereichen am Höhenleitwerk, d.h. die vier dazu zugeordneten Bereiche über Mikrowelle beispielweise 30 sec beheizt werden, dann die Zyklusbereiche 2, 3 und schließlich der Zyklusbereich 4 am Seitenleitwerk, um danach erneut mit dem folgenden Zyklus bei 1 wieder zu beginnen. Der Bereichszyklus ist also 1, 2, 3, 4. Werden die beiden Zyklusbereiche 1 erwärmt, werden hier die andern während dieser Zeit nicht erwärmt. Damit sind in dieser Teilzeit aus der Zykluszeit auch nur die beiden Mikrowellenquellen für die Oberflächensegmente 1 2 Wärmequellen, danach 2, 3 und letztlich 4. Danach beginnt der Zyklus wieder bei 1.

Ein Kühlmittelkreislauf, der mindestens eine Gruppe an Doppelleitungen und die zugehörigen Mikrowellenquellen, bzw. deren Wärmequellen enthält, zeigt Figur 4. Die Darstellung ist schematisch in die Ebene gelegt. Sie zeigt den durchgehenden Doppelleitungsbereich entlang der angeströmten Kante und die davon beidseitig senkrecht abgehenden Doppelleitungszweige. Die Doppelleitungszweige auf der einen Seite sind verlängert und haben am Ende die Mikrowellenquellen sitzen. Am einen Endbereich des durchgehenden Doppelleitungsbereichs ist beispielhaft und hier der Übersicht wegen die Kühlmittelpumpe in den Kreislauf eingebaut. Durch diese Anordnung und Anschlussweise sind die Mikrowellenquellen, wie gefordert strömungstechnisch hintereinander geschaltet und die Doppelleitungen haben eine Hin- und Rückströmung. Die Doppelleitungszweige, die jeweils zu einer Mikrowellenquelle weiterführen, tauchen dazu in die Hohlkörper-Struktur weg. Es gibt zwei Temperaturdifferenzen, die zum Antrieb des Kühlmittelkreislaufes beitragen, einmal ΔT_{MQ} an der Kühlschlange der Mikrowellenquelle und zum andern ΔT_{HW} auf dem Weg von der Hohlkörper-Wand zur Mikrowellenquelle.

## Patentansprüche

1. Mikrowellendichte, formstabile Hohlkörper-Struktur, einschließend:
eine an den meteorologischen Einflüssen der Atmosphäre ausgesetzten und mit einem metallischen Überzug zur Umgebung ausgestatteten Oberfläche, wobei diese Oberfläche zumindest im Bereich mindestens einer von der Atmosphärenluft angeströmtem Kante aus Faserverbundwerkstoff aus Kohlefaser, Glasfaser oder einem davon oder einer anderen Faser mit Additiven besteht,
mehrere von der luftangeströmten Kante weglaufende, in der Hohlkörper-Struktur verankerte Rippen,
einen zur luftangeströmten Kante parallelen, in der Hohlkörper-Struktur verankerten Holm,
eine mikrowellentechnischen Einrichtung zur Eisfreihaltung und Enteisung von zumindest Abschnitten dieses Bereichs, wobei die mikrowellentechnische Einrichtung die folgenden in den Hohlkörper eingebauten Komponenten einschließt:
mehrere an eine elektrische Energiequelle anschließbare Netztteile,
mehrere über einem jeweiligen Netzteil betriebene, zur Umgebung hin mikrowelllendicht gekapselte Mikrowellenquellen,
einen an je eine Mikrowellenquelle angeschlossenen Hohlleiter, um einen vorgegebenen Bereich der Wand des Hohlkörpers mit der Mikrowelle zu beaufschlagen und damit zu erwärmen, wobei diese Hohlkörper-Struktur
**dadurch gekennzeichnet ist, dass:**
der zumindest abschnittsweise zu enteisende Bereich der luftangeströmten Kanten in vorzugsweise flächengleiche, entlang der Kante aneinandergereihte Oberflächensegmente gegliedert ist, deren von der Kante jeweils zwei weglaufende Grenzen mit dem Verlauf jeweils einer Rippe und deren beide anderen zwei Grenzen mit dem des Holms zusammenfallen,
durch die Oberflächensegmente, Rippen und den Holm, im Innern der Hohlkörper-Struktur entlang der luftangeströmten Kante mehrere Kammern bestehen, die jeweils zu ihrer Umgebung hin mikrowellendicht abgeschottet sind,
im Innern jeder Kammer an der von innen aus gesehenen Innenseite der Wand des Holms parallel zur Kante eine Hohlleiterauskoppelstruktur befestigt ist, die durch die Wand des Holms hindurch an eine dazugehörende Mikrowellenquelle angeflanscht ist, wobei die Geometrie der Kammern und
die Frequenz der Mikrowelle derart ist, dass sich in jeder Kammer bei zugehörig eingeschalteter Mikrowellenquelle ein elektromagnetisches Feld mit Übermodierung zum flächengleichen bzw. gleichmäßigen Erwärmungseintrag in der Wand der Oberflächensegmente aus Faserverbundwerkstoff anregt,
weiterhin metallische Doppelleitungen aus elektrisch gut leitendem Material im eisfrei zu haltenden Bereich entlang der luftangeströmten Kante und entlang der Grenze des Oberflächensegments bis mindestens zum Holm am Stoß der dortigen Rippe in der Wand der Hohlkörper-Struktur verlaufen und zusammen mit einer an jede Mikrowellenquelle eingebauten Kühlschlange derart zusammengeschlossen sind, dass in den Doppelleitungen entlang der Kante und
den Rippen an den Grenzen der Oberflächensegmente eine Kühlmittelgegenströmung besteht,
die Kühlschlangen an den Mikrowellenquellen strömungstechnisch zueinander in Reihe liegen.

2. Mikrowellendichte, formstabile Hohlkörper-Struktur nach Anspruch 1, **dadurch gekennzeichnet, dass** die Auskoppelstrukturen einen runden Querschnitt haben.

3. Mikrowellendichte, formstabile Hohlkörper-Struktur nach Anspruch 1, **dadurch gekennzeichnet, dass** die Auskoppelstrukturen einen rechteckigen Querschnitt haben, um in der Einbaukammer bei der vielmodigen Anregung auch den Grundmode mit dabei zu haben.

4. Mikrowellendichte, formstabile Hohlkörper-Struktur nach einem der Ansprüche 2 und 3, **dadurch gekennzeichnet, dass** die Mikrowellenquellen unter Berücksichtigung der Geometrie des zu erwärmenden Bereichs, der Betriebsfrequenz und des Leistungsbedarfs Magnetrons oder Klystrons oder Rückwärtswellen-(Backwardwave)-Oszillatoren (BWO) oder EIO (Extended Interaction Oscillators) oder Gyrotrons oder Klystroden sind.

5. Mikrowellendichte, formstabile Hohlkörper-Struktur nach Anspruch 4, **dadurch gekennzeichnet, dass** die in die Faserstruktur integrierten, mit Kühlmittel durchströmbaren Doppelleitungen eines Bereichs zumindest in den Enteisungsbereichen metallische Rohre mit rundem oder polygonalem Querschnitt sind.

6. Mikrowellendichte, formstabile Hohlkörper-Struktur nach Anspruch 5, **dadurch gekennzeichnet, dass** ein Kühlmittelkreislauf mindestens die Doppelleitungen und die damit verbundenen Mikrowellenquellen eines zu eisfrei zu haltenden und zu enteisenden Bereichs als Bestandteil hat.

7. Mikrowellendichte, formstabile Hohlkörper-Struktur nach Anspruch 6, **dadurch gekennzeichnet, dass** in jeden Kühlmittelkreislauf zur Unterstützung der Kühlmittelströmung eine Kühlmittelpumpe eingebaut ist.

8. Verfahren zum Eisfreihalten und Enteisen eines vorgegebenen Oberflächenbereichs an mikrowellendichten, formstabilen Hohlkörper-Strukturen nach Anspruch 1
**dadurch gekennzeichnet, dass**
bei den Hohlkörper-Strukturen der jeweilige Kühlmittelkreislauf eines Bereichs der flächengleichen Oberflächensegmente entlang einer solchen luftangeströmten Kante zumindest bei Vereisungsgefahr zur Eisfreihaltung der linienförmigen Struktur entlang der Doppelverrohrung ständig aufrecht erhalten wird,
die entlang einer angeströmten Kante der Hohlkörper-Struktur im Hohlkörper zugeordneten und an dem zugehörigen Abschnitt des Holms an diesem montierten Mikrowellenquellen zyklisch derart betrieben werden, dass innerhalb der Zykluszeit mindestens eine Mikrowelle davon betrieben wird, die übrigen ausgeschaltet bleiben und umgekehrt, zwischen zwei gerade eingeschalteten Mikrowellenquellen mindestens eine ausgeschaltete liegt,
jede Mikrowellenquelle während ihrer Einschaltzeit pulsbreitengeregelt oder im Dauerstrich betrieben werden kann, womit der Wärmeeintrag in das zugehörige Oberflächensegment dosierbar ist.

9. Verfahren nach Anspruch 8, **dadurch gekennzeichnet, dass** die in jeden Kühlmittelkreislauf eingebaute Kühlmittelpumpe zur Eisfreihaltung und Enteisung die über den Temperaturgradienten getriebene Kühlmittelströmung zumindest zum Anschieben derselben aktiv betrieben wird.

## Claims

1. Microwave-tight, dimensionally stable hollow body structure, including
a surface exposed to meteorological impacts of the atmosphere and provided with a metallic coating, with this surface, in the area of an edge facing air flow at least, consisting of a fiber-composite of carbon fiber, glass fiber or one of it or of another fiber with additives,
several ribs leaving the flow-facing edge and fixed in the hollow body structure,
a beam parallel to the flow-facing edge, which is fixed in the hollow body structure,
a microwave system for keeping ice-free and deicing sections of this area at least, with the microwave system including the following components installed in the hollow body:
Several mains units to be connected to an electric energy source,
several microwave-tight encapsulated microwave sources operated by a corresponding mains unit,
a waveguide connected to a microwave source each in order to load and, hence, to heat a given area of the wall of the hollow body by the microwave, with this hollow body structure
being **characterized by**
the area of the flow-facing edges that is to be deiced partly at least being divided into surface segments of preferably the same area and arranged along the edge, with the two boundaries of these segments that run away from the edge coinciding with a rib each and the other two boundaries coinciding with the beam,
the surface segments, ribs, and beam forming several chambers along the flow-facing edge inside the hollow body structure and these chambers being sealed in a microwave-tight manner towards their surroundings,
a waveguide decoupling structure being fixed inside each chamber at the inner side of the beam wall parallel to the edge and this waveguide decoupling structure being flanged to a corresponding microwave source through the beam wall, the geometry of the chambers and the frequency of the microwave being such that when switching on the microwave source a multi-mode electromagnetic field is excited for homogeneous heat supply to the wall of the surface segments made of the fiber composite,
and metal twin conductors of good electric conductivity being arranged in the area to be deiced along the flow-facing edge and along the boundary of the surface segment up to at least the beam at the joint with the rib there in the wall of the hollow body structure and being connected to the cooling coil installed in each microwave source such that a coolant counterflow is generated in the twin conductors along the edge and the ribs at the boundaries of the surface segments,
the cooling coils of the microwave sources being connected in series as far as flow technology is concerned.

2. Microwave-tight, dimensionally stable hollow body structure according to Claim 1, **characterized by** the decoupling structures having a round cross section.

3. Microwave-tight, dimensionally stable hollow body structure according to Claim 1, **characterized by** the decoupling structures having a rectangular cross section so as to include the basic mode in the multi-mode excitation in the installation chamber.

4. Microwave-tight, dimensionally stable hollow body structure according to one of Claims 2 and 3, **characterized by** the microwave sources representing magnetrons or clystrons or backward wave oscillators (BWO) or extended interaction oscillators (EIO) or gyrotrons or clystrodes, depending on the geometry of the area to be heated, operation frequency, and power consumption.

5. Microwave-tight, dimensionally stable hollow body structure according to Claim 4, **characterized by** the twin conductors integrated in the fiber structure and to be passed by the coolant flow representing metal tubes of round or polygonal cross section in the deicing areas at least.

6. Microwave-tight, dimensionally stable hollow body structure according to Claim 5, **characterized by** a coolant circuit comprising the twin conductors and the connected microwave sources of the area to be kept ice-free and to be deiced at least.

7. Microwave-tight, dimensionally stable hollow body structure according to Claim 6, **characterized by** a coolant pump being installed in each coolant circuit to support the coolant flow.

8. Method for keeping ice-free and deicing a given surface area of microwave-tight, dimensionally stable hollow body structures
**characterized by**
the respective coolant circuit of an area of the surface segments of identical area along such a flow-facing edge being maintained permanently for deidng the line-shaped structure along the double tubing in case of the risk of ice formation at least,
the microwave sources arranged along a flow-facing edge in the hollow body and fixed to the respective section of the beam being operated cyclically such that at least one microwave of them is in operation during cyde time, while the others remain switched off and vice versa,
at least one switched-off microwave source lying between two switched-on microwave sources,
each microwave source being operated in a pulse width-controlled manner or in the continuous mode when switched on, as a result of which heat supply to the corresponding surface segment can be adjusted.

9. Method according to daim 8, **characterized by** the coolant pump installed in each coolant circuit for keeping ice-free and deicing being operated actively for starting the coolant flow driven by the temperature gradients at least.

## Revendications

1. Structure de corps creux indéformable, étanche aux microondes, comprenant:
une surface exposée aux influences météorologiques de l'atmosphère et munie d'un revêtement métallique protecteur contre l'environnement, cette surface étant constituée, du moins dans la zone de l'arête exposée au courant atmosphérique, d'un matériau renforcé par des fibres, fibres de carbone, fibres de verre ou de l'un de ces matériaux ou d'une autre fibre contenant des additifs,
plusieurs nervures partant de l'arête exposée au courant atmosphérique, ancrées dans la structure de corps creux,
un longeron parallèle à l'arête exposée au courant atmosphérique, ancrée dans la structure de corps creux,
une installation électrothermique à hyperfréquences pour empêcher le givrage ou assurer le dégivrage d'au moins quelques secteurs de cette zone, l'installation électrothermique à hyperfréquences comprenant les éléments suivants, intégrés dans le corps creux:
plusieurs blocs d'alimentation raccordables à une source d'énergie électrique, plusieurs sources de microondes fonctionnant par l'intermédiaire de leur bloc d'alimentation respectif, à blindage étanche aux microondes par rapport à l'environnement,
un guide d'ondes raccordé à une source de microondes respective pour alimenter par la microonde une zone donnée de la paroi du corps creux en la chauffant, cette structure de corps creux
**étant caractérisée en ce que:**
la zone à dégivrer, du moins par secteurs, des arêtes exposées au courant atmosphérique est divisée en segments de surface, de préférence au surfaces identiques, se succédant le long de l'arête et dont deux bords partant de chaque arête coïncident avec le tracé d'une nervure respective, les autres deux bords coïncidant avec le tracé du longeron,
qu'en raison des segments, des nervures et du longeron, plusieurs chambres existent à l'intérieur de la structure de corps creux le long de l'arête exposée au courant atmosphériques, dont chacune est cloisonnée d'une manière étanche aux microondes par rapport à leur environnement,
qu'une structure de déclenchement de guide d'ondes est fixée à l'intérieur de chaque chambre, sur la face intérieure vue de l'intérieur, de la paroi du longeron, parallèlement à l'arête, qui est bridée à une source de microondes, à travers la paroi du longeron, la géométrie des chambres et la fréquence de la microonde étant telles qu'un champ électromagnétique à surmodulation s'excite en vue de l'apport thermique dans la paroi des segments de surface en matériau renforcé par des fibres,
qu'en outre des lignes à double fil métalliques en un matériau bien conducteur électriquement sont posées dans la paroi de la structure de corps creux, dans la zone à maintenir débarrassée de glace, le long de l'arête sous courant atmosphérique et le long du bord du segment de surface du moins jusqu'au longeron, sur le joint de la nervure qui s'y trouve, et que celles-ci sont associées à un serpentin de réfrigération monté sur chaque source de microondes de telle façon que dans les lignes à double fil, le long de l'arête et des nervures, aux bords des segments de surface, il existe un contre-courant de fluide de refroidissement,
que les serpentins de réfrigération sur les sources de microondes sont montés en série l'un par rapport à l'autre en termes de technique des fluides.

2. Structure de corps creux indéformable, étanche aux microondes selon la revendication 1, **caractérisée en ce que** les structures de déclenchement possèdent une section transversale ronde.

3. Structure de corps creux indéformable, étanche aux microondes selon la revendication 1, **caractérisée en ce que** les structures de déclenchement possèdent une section transversale rectangulaire pour disposer également du mode de base pour l'excitation multimodale dans la chambre encastrée.

4. Structure de corps creux indéformable, étanche aux nicroondes, selon l'une quelconque des revendications 2 et 3, **caractérisée en ce que** les sources de microondes sont des magnétrons ou des clystrons ou des tubes à ondes régressives (Backwardwave Oscillators, BWO) ou des oscillateurs à interaction étendue (Extended Interaction Oscillatoros, EIO) ou des gyrotrons ou des clystrodes, en tenant compte de la géométrie de la zone à chauffer.

5. Structure de corps creux indéformable, étanche aux microondes selon la revendication 4, **caractérisée en ce que** les lignes à double fil d'une zone, intégrées dans la structure de fibres et pouvant être traversées par un réfrigérant sont des tubes métalliques à section ronde ou polygonale, du moins dans les zones de dégivrage.

6. Structure de corps creux indéformable, étanche aux microondes selon la revendication 5, **caractérisée en ce qu'**un circuit de réfrigérant est constitué du moins des lignes à double fil et des sources de microondes associées à celles-ci d'une zone à tenir débarrassée de glace et à dégivrer.

7. Structure de corps creux indéformable, étanche aux microondes selon la revendication 6, **caractérisée en ce qu'**une pompe de réfrigérant est intégrée dans chaque circuit de refroidissement pour appuyer l'écoulement du réfrigérant.

8. Procédé pour maintenir débarrassée de glace et pour dégivrer une zone donnée d'une surface sur des structures de corps creux indéformables, étanches aux microondes selon la revendication 1,
**caractérisé en ce que**
dans les structures de corps creux, le circuit de réfrigérant d'une zone des segments de surface, de superficies égales, est maintenu en permanence le long d'une telle arête exposée au courant atmosphérique, du moins en cas de risque de givrage pour tenir la structure linéaire le long du double tubage débarrassée de glace,
qque les sources de microondes associées au corps creux le long d'une arête exposée au courant atmosphérique de la structure de corps creux, et montée sur le longeron sur la section correspondante de celcui-ci sont exploitées en mode cyclique de telle façon que pendant la durée du cycle, une microonde au minimum est exploitée par celles-ci et que les autres restent arrêtées et inversement, qu'entre deux sources de microondes en fonction, il se trouve au moins une source arrêtée,
qu'à l'état de fonctionnement, chaque source de microonde peut être exploitée en modulation d'impulsions en largeur ou en continu, ce qui permet de doser l'apport de chaleur au segment de surface associé.

9. Procédé selon la revendication 8, **caractérisé en ce qu'**avec la pompe de réfrigérant intégrée dans chaque circuit de refroidissement, pour tenir la surface débarrassée de glace ou pour la dégivrer, l'écoulement du réfrigérant commandé par le gradient thermique fonctionne activement du moins pour le démarrage de celle-ci.
